# EUROPEAN PATENT APPLICATION

(11) **EP 3 957 419 A1**
(43) Date of publication of application: **23.02.2022**
(21) Application number: 21189742.6
(22) Date of filing: 04.08.2021
(51) Int. Cl.: B22F 10/28, B22F 10/38, B22F 5/10, B22F 3/11, B22F 7/00, B32B 5/30, B32B 15/04, B33Y 10/00, B33Y 80/00, B32B 3/12, C22C 1/04

(54) **LIGHTWEIGHT STIFFENED PANELS MADE USING ADDITIVE MANUFACTURING TECHNIQUES**

(30) Priority: 17.08.2020 US 202016995565
(71) Applicant: Honeywell International Inc., Charlotte, NC 28202 (US)
(72) Inventor: KELLETT, Sean, Charlotte, 28202 (US)
(74) Representative: LKGlobal UK Ltd.

(57) **Abstract**

Disclosed herein are lightweight, stiffened panels made using additive manufacturing techniques. In one embodiment, a stiffened panel includes a lattice structure including a plurality of unit cells, the lattice structure defining a first side and a second side opposite the first side; a first face sheet disposed along the first side and a second face sheet disposed along the second side; and a plurality of panel-end insets and/or insert blocks disposed within the lattice structure and/or through the first and/or second face sheets and including a threaded receiving portion configured for receiving and coupling with a hardware attachment, wherein the lattice structure, the first and second face sheets, the panel-end insets, and the insert blocks include a unitary structure that excludes brazing, fasteners, adhesives, or the like for maintaining said components in a fixed relationship as a single unit, the unitary structure being manufactured using additive manufacturing techniques, and wherein the unitary structure is in a self-supporting configuration that excludes any additive manufacturing print support structures that would be removed subsequent to manufacturing using the additive manufacturing techniques.

## Description

### TECHNICAL FIELD

The present disclosure generally relates to paneling for satellite, aerospace, and vehicle applications. More particularly, the present disclosure relates to lightweight, stiffened panels made using additive manufacturing techniques.

### BACKGROUND

Paneling is used for numerous applications, for example aerospace applications, as a stiff, stable, flat structural platform. Exemplary applications include, for example: satellite raised panel assemblies, aircraft paneling, aircraft wet wings, fluid/conductive and sink heat exchangers, among various others. Many of these applications require components to be protected from environmental conditions such as vibration. For example, satellite panels are subject to several types of mechanical stress of random, transient, or harmonic types, that may be caused by events such as the launch of the satellite, the acoustic environment, or pyrotechnic shocks. As such, paneling known in the prior art has conventionally included a "honeycomb" configuration that is laminated with face sheets on either side. Additionally, as many of these applications are extremely weight sensitive, particularly those used for air and/or space vehicles, and as such materials that are strong, yet lightweight, such as aluminum, have conventionally been employed.

In a particular example, a commonly-employed laminate honeycomb panel for the commercial space sector is constructed from aluminum 1/8-inch hexagonal cells, with bonded aluminum face sheets. For utility in inserting/affixing various hardware components to the panels, insert pockets may be carefully cut into the assembled laminate honeycomb, and threaded insert blocks are bonded in place, allowing for various hardware to be mounted against the panel. In typical examples, these insert blocks may account for anywhere up to about 50% of the overall mass of the panel.

Due to the cutting and bonding operations required to include the insert blocks, in addition to the manufacture of the honeycomb structure itself, these conventional honeycomb panels are both difficult and expensive to manufacture. Accordingly, it would be desirable to provide improved paneling that is capable of dampening vibration as well as having various hardware affixed thereto, but that does not suffer from the drawbacks of requiring complicated and expensive manufacturing processes. Simplified manufacturing processes, and paneling designs that take advantage of such simplified manufacturing processes, would allow for paneling with equal or greater functionality in terms of weight, vibration damping, and utility, while being significantly less time-consuming and expensive. Furthermore, other desirable features and characteristics of the vibration isolator assemblies will become apparent from the subsequent detailed description and the appended claims, taken in conjunction with the accompanying drawings and the preceding background.

### BRIEF SUMMARY

Disclosed herein are lightweight, stiffened panels made using additive manufacturing techniques. In one exemplary embodiment, a method for manufacturing a stiffened panel includes the step of providing three-dimensional computer design model for the stiffened panel. The three-dimensional computer design model includes a lattice structure including a plurality of unit cells and defining a first side and a second side opposite the first side and four panel ends lateral to the first and second sides, a first face sheet disposed along the first side and a second face sheet disposed along the second side, a plurality of panel-side insert blocks disposed within the lattice structure and through either or both of the first and second face sheets and including a threaded receiving portion configured for receiving and coupling with a hardware attachment, and a plurality of panel-end insets disposed within the lattice structure at the panel ends and configured for securing the stiffened panel at a location, attaching multiple panels together, and/or coupling with a hardware attachment. The three-dimensional computer design model excludes additive manufacturing print support structures. The method further includes the step of using an additive manufacturing technique, building-up the stiffened panel in accordance with the three-dimensional computer design model in a layer-by-layer manner that excludes the use of brazing, fasteners, adhesives, or the like such that the lattice structure, the first and second face sheets, the panel-end insets, and the panel-side insert blocks include a unitary structure.

In another exemplary embodiment, a stiffened panel includes a lattice structure including a plurality of unit cells, the lattice structure defining a first side and a second side opposite the first side; a first face sheet disposed along the first side and a second face sheet disposed along the second side; and a plurality of panel-end insets and/or insert blocks disposed within the lattice structure and/or through the first and/or second face sheets and including a threaded receiving portion configured for receiving and coupling with a hardware attachment, wherein the lattice structure, the first and second face sheets, the panel-end insets, and the insert blocks include a unitary structure that excludes brazing, fasteners, adhesives, or the like for maintaining said components in a fixed relationship as a single unit, the unitary structure being manufactured using additive manufacturing techniques, and wherein the unitary structure is in a self-supporting configuration that excludes any additive manufacturing print support structures that would be removed subsequent to manufacturing using the additive manufacturing techniques.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

The present invention will hereinafter be described in conjunction with the following drawing figures, wherein like numerals denote like elements, and wherein:
FIG. 1 is a perspective view of an exemplary stiffened panel assembly in accordance with some embodiments of the present disclosure;
FIG. 2 is an enlarged view of the lattice structure that makes up the interior of the stiffened panel assembly shown in FIG. 1, in accordance with some embodiments of the present disclosure;
FIG. 3 is a side view of one face on the stiffened panel assembly shown in FIG. 1, illustrating various insert blocks that may be included in the stiffened panel assembly, in accordance with some embodiments of the present disclosure;
FIG. 4 provides a flowchart illustrating a method for manufacturing stiffened panel assembly of FIGS. 1 and 3 using additive manufacturing techniques, in accordance with some embodiments of the present disclosure; and
FIG. 5 is a schematic view of a powder bed additive manufacturing system for manufacturing the stiffened panel assembly of FIGS. 1 and 3, in accordance with some embodiments of the present disclosure.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. Furthermore, as used herein, numerical ordinals such as "first," "second," "third," etc., such as first, second, and third components, simply denote different singles of a plurality unless specifically defined by language in the appended claims. All of the embodiments and implementations of the stiffened panel assemblies and methods for the manufacture thereof described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Disclosed herein are lightweight, stiffened panels made using additive manufacturing techniques. Unlike known panel assemblies, embodiments of the present disclosure utilize a manufacturing process that incorporates a low energy density laser beam, referred to as additive manufacturing (AM). This "free-form" or additive manufacturing process uses a small, focused beam to build a component by fusing one layer of powder to the fused layer of powder directly beneath it. The manufacturing methods disclosed herein utilize AM to build unique designs that are not possible with prior technologies such as casting, welding, cutting, and/or bonding, where costly and time-consuming tooling is required. Moreover, the panel assemblies of the present disclosure are configured in a self-supporting configuration that excludes the use of panel support structures, which are defined herein as any design feature used for the purpose of support the panel structure in place during additive manufacturing, and which are subsequent to additive manufacturing removed using machining or the like prior to the panel being employed in its end use.

Furthermore, the use of AM technology in connection with the manufacturing of panel assemblies as described herein enables a significant part count reduction from panel assemblies previously known in the art. Still further, by consolidating the entire manufacturing process in one AM environment, a fixed process may be employed to reduce variability in the assembly since all units are produced as one from the same machine and process. Multiple parts with their associated tolerance and variability (and defects) are no longer required. The result thereof is a reduced part count, optimized assembly that may be produced with lower cost and reduced cycle time when compared to previously known methods.

As a general overview, described herein are stiffened panel assemblies that include a lattice structure that has a plurality of unit cells in a rectangular (panel-shaped) arrangement. The lattice structure has a first side and a second side opposite the first side. A first face sheet is disposed along the first side and a second face sheet is disposed along the second side. Additionally, a plurality of panel-end insets and panel-side insert blocks are disposed within the lattice structure, each of which includes a threaded receiving portion configured for receiving and coupling with a hardware attachment. The lattice structure, the first and second face sheets, and the insets and insert blocks are manufactured as a unitary structure using additive manufacturing that excludes brazing, fasteners, adhesives, or the like for maintaining said components in a fixed relationship as a single unit. This avoids the time consuming and costly steps of cutting and bonding operations required to include the insets and insert blocks of the prior art, as initially noted above, thereby saving time and expense. This unique unitary structure is enabled by manufacturing the panel assemblies utilizing additive manufacturing techniques. Moreover, using these techniques, the design can be provided such that the unitary panel assembly structure is in a self-supporting configuration that does not require additive manufacturing print support structures that would be removed subsequent to manufacturing using the additive manufacturing techniques. Attention is now directed to the Figures of the present disclosure.

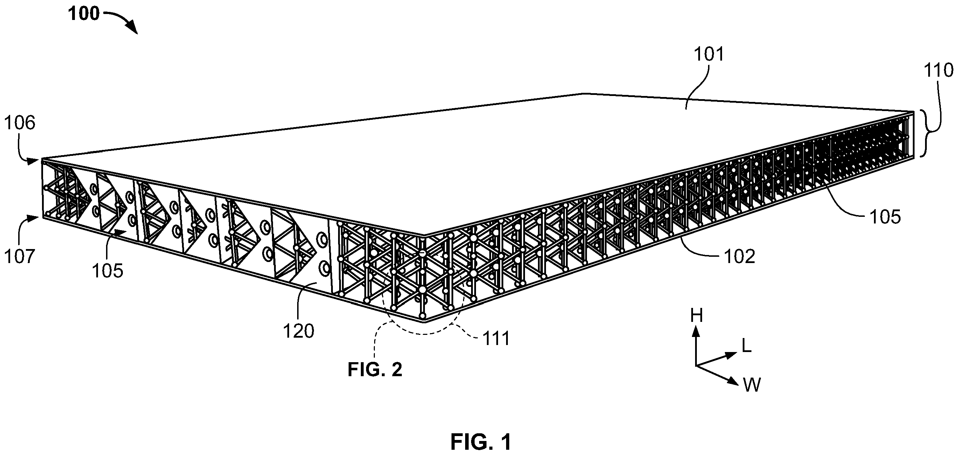

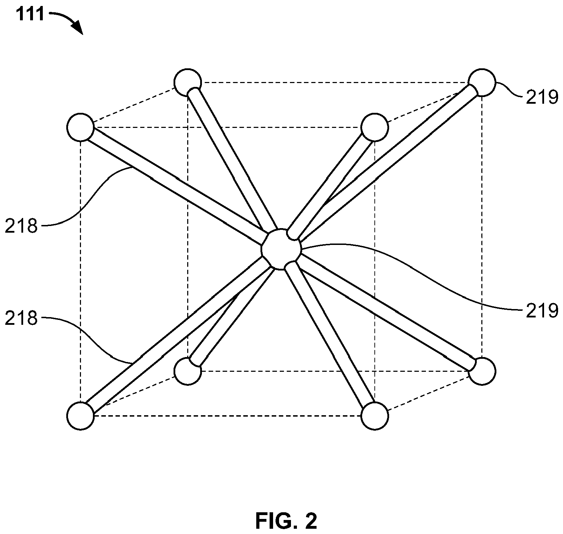

FIG. 1 is a perspective view of an exemplary stiffened panel assembly 100 in accordance with some embodiments of the present disclosure. Stiffened panel assembly 100 includes a lattice structure 110 including a plurality of unit cells 111. The unit cells 111 may be arranged in a three dimensional array having a length (L, defined by the number of unit cells 111 extending in a first direction), a width (W, defined by the number of unit cells 111 extending in a second direction perpendicular to the first direction), and a height (H, defined by the number of layers of unit cells 111 having the aforesaid length and width). Greater details regarding the configuration of each unit cell 111 is provided below in connection with FIG. 2. The lattice structure 110 defines a first side 106 (defined against the uppermost layer of unit cells 111 as shown in FIG. 1) and a second side 107 opposite the first side 106 (defined against the lowermost layer of unit cells 111 as shown in FIG. 1). It also define four panel "ends" along its lateral sides (those four side orthogonal to the first and second sides 106, 107). The lattice structure 110 may include one or more panel-end insets 120 for securing the stiffened panel assembly 100 in place at an appropriate location of whatever application it is used for. Furthermore, panel-end insets 120 may be used to attach multiple panels together as well as for the attachment of mounting brackets. As such, panel-end insets 120, as illustrated, may be provided with one or more threaded openings for receiving and securing one or more threaded members.

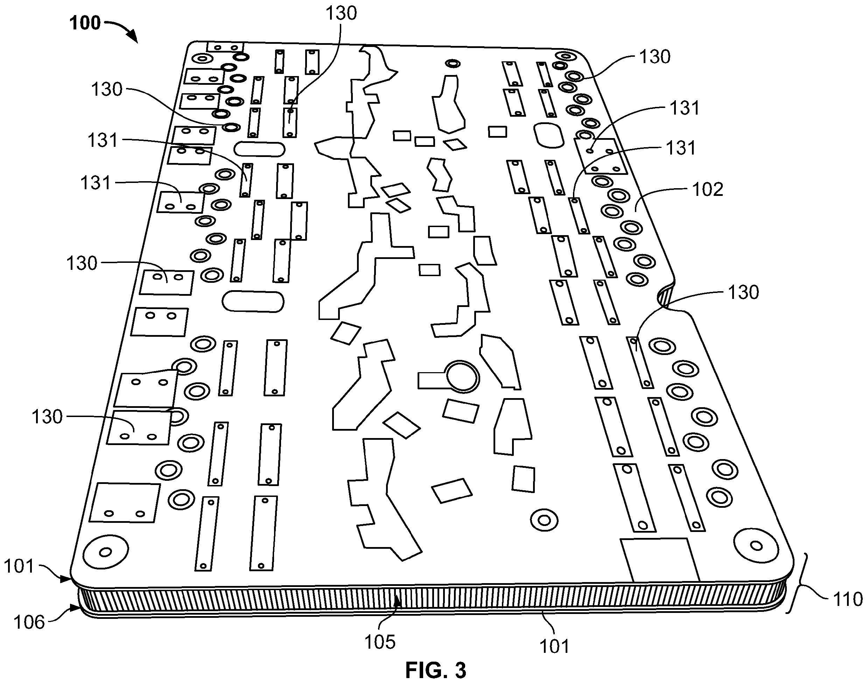

With continued reference to FIG. 1, the stiffened panel assembly 100 includes a first face sheet 101 disposed along the first side 106 and a second face sheet 102 (not visible in FIG. 1, but shown in FIG. 3) disposed along the second side 107. The first and second face sheets 101, 102 may thus be disposed substantially parallel to one another on opposite sides of the lattice structure 110, separate by a distance equal the height (H) of the stiffened panel assembly 100. Moreover, the first and second face sheets 101, 102 may have length and width dimensions substantially similar to the length (L) and width (W) of the lattice structure 110. First face sheet 101, as illustrated in FIG. 1, may be substantially continuous along its surface, meaning that it is flat and uninterrupted by voids, threadings, mounts, or the like. In contrast, as illustrated in FIG. 3 and as described in greater detail below, second face sheet 102 may not be continuous, but may be interrupted by voids, threadings, mounts, or the like. Alternatively, first face sheet 101 may have any number or configuration of voids, threadings, mounts, etc., of the kind shown in FIG. 3.

Turning now to FIG. 2, illustrated is an enlarged view of the lattice structure 110 that makes up the interior of the stiffened panel assembly 100 shown in FIG. 1, with particular focus on an individual unit cell 111, in accordance with some embodiments of the present disclosure. In particular, FIG. 2 illustrates the mesh of a unit cell 111 in which nodes 219 are arranged in a centered cubic network. The black circles of FIG. 2 illustrate the nodes 219 and the black lines illustrate bars 218 connected between the nodes 219. The dotted lines determine the cubic bounds of a unit cell 111. It should be noted that the nodes 219 are depicted as black circles for purposes of illustration only, and indeed may simply represent a location of joinder of two bars 218 without any particular difference in shape. The main direction of each bar 218 of the unit cell 111 is neither vertical nor horizontal in the reference frame of FIG. 2. That is to say, each of the bars 218 may be inclined relative to the cubic surfaces. In the configuration shown, one bar 218 extends from each of the corner nodes 219 (that is, the eight nodes 219 located at each of the eight corners of the cube) to join the one node 219 that is located at the center of the cube (a total of eight bars 218), thus resulting in the aforesaid centered cubic network configuration.

Turning now to FIG. 3, illustrated in greater detail is the second face sheet 102 located along the second side 102. The second face sheet 102 includes a plurality of panel-side insert blocks 130 disposed within the lattice structure 110 and including threaded receiving portions 131 configured for receiving and coupling with a hardware attachment, in accordance with one exemplary/reference and non-limiting configuration (of course, it should be appreciated that first face sheet 101 may also include a configuration having a plurality of insert blocks 130). Given the variety of different hardware attachments that may be employed in a variety of different applications, it should be appreciated that the size, configuration, and number of threaded receiving insert blocks 130 included at the second face sheet and into the lattice structure will vary widely; FIG. 3 merely illustrates one exemplary, non-limiting embodiment that shows a variety of shapes and sizes of insert blocks 130 having various numbers of threaded receiving portions 130 for illustrative purposes. The shape, size, and overall configuration of the insert blocks 130 required for a particular hardware attachment should be known to those having ordinary skill in the art, and thus and appendix thereof is not included in this disclosure.

As initially noted, the lattice structure 110, the first and second face sheets 101, 102, the panel-side insert blocks 130, and the panel-end insets 120 form a unitary structure that excludes brazing, fasteners, adhesives, or the like for maintaining said components in a fixed relationship as a single unit. This unitary structure is enabled through the use of additive manufacturing techniques to manufacture the panel assemblies 100. Further, in the configuration shown in FIGS. 1 and 3 and as described above, the unitary structure is in a self-supporting configuration that does not require additive manufacturing print support structures to be printed as part of the panel assembly, and which would be removed subsequent to manufacturing using the additive manufacturing techniques. In particular, the panel assemblies 100 are self-supporting when printed such that the H-L plane (FIG. 1) is parallel with the additive manufacturing build surface, and additive manufacturing proceeds upward from the build surface in the W direction, as will be described in greater detail below. In this build orientation, each face sheet 101, 102 is in its own plane, each panel-end inset 120 is able to grow upward from a single point on the ends of the face sheets 101, 102 without any additional support, and each insert block 130 is able to grown from the interior of the face sheets 101, 102 without an additional support. This configuration thus avoids an additional process step of machining away support structures after AM printing, which further reduces manufacture time and expense.

Greater detail regarding the additive manufacturing techniques noted above will now be provided, again with reference to the exemplary panel assembly illustrated in FIGS. 1 and 3. It will be appreciated that certain features of the presently described panel assemblies would be relatively expensive to manufacture using conventional manufacturing techniques, including cutting and bonding, for example. As such, designs in accordance with the present disclosure are not known in the prior art. However, it has been discovered that using additive manufacturing techniques, or other recently developed manufacturing techniques, designs in accordance with the present disclosure can be manufactured at a significantly reduced cost as compared to traditional manufacturing techniques. Additive manufacturing techniques include, for example, direct metal laser sintering (DMLS ― a form of direct metal laser fusion (DMLF)) with aluminum alloys to achieve a lightweight, yet stiff panel assembly (of course, other alloys would be possible as well if weight is not of particular concern for a given application). DMLS is discussed in greater detail below. Another technique includes electron beam melting (EBM). Still further AM techniques are known to those having ordinary skill in the art, and may be possibly used in connection with the present disclosure.

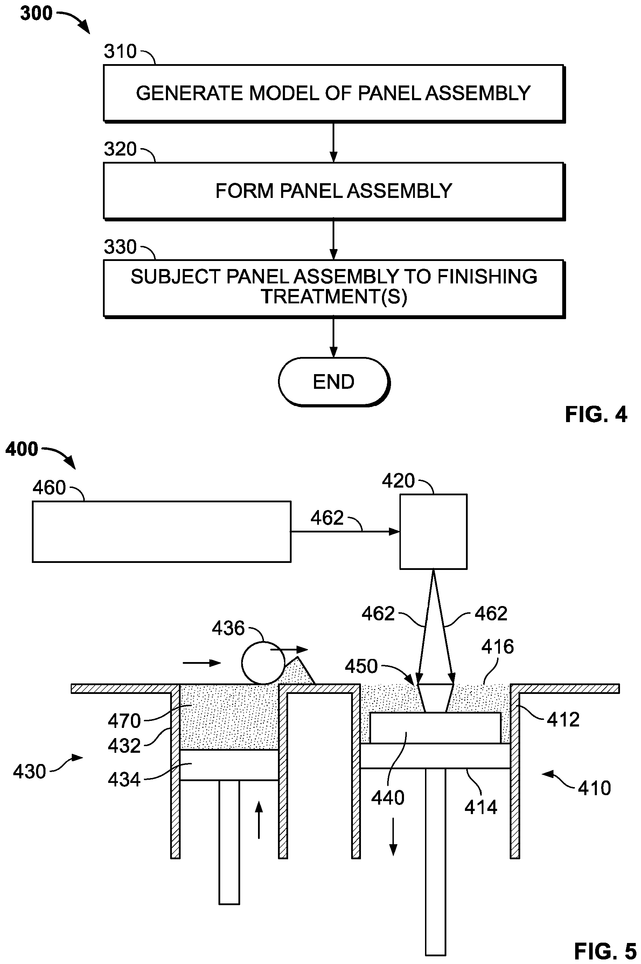

As initially noted above, the above-described panel assemblies 100 in accordance with the present disclosure are suited for manufacture using additive manufacturing techniques. As such, in accordance with an exemplary embodiment, FIG. 4 provides a flowchart illustrating a method 300 for manufacturing a panel assembly 100 using, in whole or in part, powder bed additive manufacturing techniques based on various high energy density energy beams. In a first step 310, a model, such as a design model, of the panel assembly 100 may be defined in any suitable manner. For example, the model may be designed with computer aided design (CAD) software and may include three-dimensional ("3D") numeric coordinates of the entire configuration of the panel assembly 100 including both external and internal surfaces. In one exemplary embodiment, the model may include a number of successive two-dimensional ("2D") cross-sectional slices that together form the 3D panel assembly 100. The design model includes the face sheets 101, 102, the lattice 110, and the insets/inserts 120/130, all of which are manufactured using the additive manufacturing technique in a layer-by-layer manner.

In step 320 of the method 300, the panel assembly 100 is formed according to the model of step 310. In one exemplary embodiment, a portion of the panel assembly 100 is formed using a rapid prototyping or additive layer manufacturing process. In other embodiments, the entire panel assembly 100 is formed using a rapid prototyping or additive layer manufacturing process. It should be noted that the portions of the panel assembly 100 are being fabricated as an integral structure (i.e., having no mechanical fastening means, welding, brazing, soldering, or the like) using this additive manufacturing process, which eliminates a potential failure point that may be encountered in prior art configurations that are not integral, as well as eliminating the need for subsequent cutting and bonding of features 120/130, for example.

Some examples of additive layer manufacturing processes include: direct metal laser sintering (DMLS), in which a laser is used to sinter a powder media in precisely controlled locations; laser wire deposition in which a wire feedstock is melted by a laser and then deposited and solidified in precise locations to build the product; electron beam melting; laser engineered net shaping; and selective laser melting. In general, powder bed additive manufacturing techniques provide flexibility in free-form fabrication without geometric constraints, fast material processing time, and innovative joining techniques. In one particular exemplary embodiment, DMLS is used to produce the panel assembly 100 in step 320. DMLS is a commercially available laser-based rapid prototyping and tooling process by which complex parts may be directly produced by precision sintering and solidification of metal powder into successive layers of larger structures, each layer corresponding to a cross-sectional layer of the 3D component.

As such, in one exemplary embodiment, step 320 is performed with DMLS techniques to form the panel assembly 100. However, prior to a discussion of the subsequent method steps of FIG. 4, reference is made to FIG. 5, which is a schematic view of a DMLS system 400 for manufacturing the panel assembly 100.

Referring to FIG. 5, the system 400 includes a fabrication device 410, a powder delivery device 430, a scanner 420, and a low energy density energy beam generator, such as a laser 460 (or an electron beam generator in other embodiments) that function to manufacture the panel assembly 100 with build material 470. The fabrication device 410 includes a build container 412 with a fabrication support 414 on which the panel assembly 100 is formed and supported. The fabrication support 414 is movable within the build container 412 in a vertical direction and is adjusted in such a way to define a working plane 416. The delivery device 430 includes a powder chamber 432 with a delivery support 434 that supports the build material 470 and is also movable in the vertical direction. The delivery device 430 further includes a roller or wiper 436 that transfers build material 470 from the delivery device 430 to the fabrication device 410.

During operation, a base block 440 may be installed on the fabrication support 414. The fabrication support 414 is lowered and the delivery support 434 is raised. The roller or wiper 436 scrapes or otherwise pushes a portion of the build material 470 from the delivery device 430 to form the working plane 416 in the fabrication device 410. The laser 460 emits a laser beam 462, which is directed by the scanner 420 onto the build material 470 in the working plane 416 to selectively fuse the build material 470 into a cross-sectional layer of the panel assembly 100 according to the design. More specifically, the speed, position, and other operating parameters of the laser beam 462 are controlled to selectively fuse the powder of the build material 470 into larger structures by rapidly melting the powder particles that may melt or diffuse into the solid structure below, and subsequently, cool and re-solidify. As such, based on the control of the laser beam 462, each layer of build material 470 may include un-fused and fused build material 470 that respectively corresponds to the cross-sectional passages and walls that form the panel assembly 100. In general, the laser beam 462 is relatively low power, but with a high energy density, to selectively fuse the individual layer of build material 470. As an example, the laser beam 462 may have a power of approximately 50 to 500 Watts, although any suitable power may be provided.

As initially noted, the panel assemblies 100 are in self-supporting configuration when printed such that the H-L plane (FIG. 1) is parallel with the upper (build) surface of base block 440. Additive manufacturing proceeds upward from the base block 440 in the W direction (FIG. 1), namely towards scanner 420 as shown in FIG. 5. In this build orientation, each face sheet 101, 102 is in its own plane building upwards from the base block 440, each panel-end inset 120 is able to grow upward from a single point on the ends of the face sheets 101, 102 without any additional support, and each insert block 130 is able to grown from the interior of the face sheets 101, 102 without an additional support. As can be seen in FIG. 1, there are no physical support structures for build support included on the assemblies 100. Thus, there is no need for any additional process steps, after building-up layer by layer, of machining away support structures, which further reduces manufacture time and expense.

Upon completion of a respective layer, the fabrication support 414 is lowered and the delivery support 434 is raised. Typically, the fabrication support 414, and thus the panel assembly 100, does not move in a horizontal plane during this step. The roller or wiper 436 again pushes a portion of the build material 470 from the delivery device 430 to form an additional layer of build material 470 on the working plane 416 of the fabrication device 410. The laser beam 462 is movably supported relative to the panel assembly 100 and is again controlled to selectively form another cross-sectional layer. As such, the panel assembly 100 is positioned in a bed of build material 470 as the successive layers are formed such that the un-fused and fused material supports subsequent layers. This process is continued according to the modeled design as successive cross-sectional layers are formed into the completed desired portion, e.g., the panel assembly 100 of step 320.

The delivery of build material 470 and movement of the panel assembly 100 in the vertical direction are relatively constant and only the movement of the laser beam 462 is selectively controlled to provide a simpler and more precise implementation. The localized fusing of the build material 470 enables more precise placement of fused material to reduce or eliminate the occurrence of over-deposition of material and excessive energy or heat, which may otherwise result in cracking or distortion. The unused and un-fused build material 470 may be reused, thereby further reducing scrap. Any suitable laser and laser parameters may be used, including considerations with respect to power, laser beam spot size, and scanning velocity.

Returning to FIG. 4, at the completion of step 320, the panel assembly 100 is removed from the powder bed additive manufacturing system (e.g., from the DMLS system 400) and then may be given a stress relief treatment. In step 330, the panel assembly 100 formed in step 320 may undergo finishing treatments. Additionally, encapsulation of the panel assembly 100 may be performed in some embodiments as part of step 330. The encapsulation layer functions to effectively convert any surface porosity and cracks into internal porosity and cracks, and after the application of pressure and heat, removes or reduces the porosity and cracks. Such encapsulation layers may be subsequently removed or maintained to function as an oxidation protection layer. Other finishing treatments that may be performed as a part of step 330 include aging, quenching, peening, polishing, or applying coatings. Further, if necessary, machining may be performed on the panel assembly 100 to achieve a desired final shape, although by avoiding the need for AM support structures as noted above (the self-supporting configuration), the need for machining should be greatly reduced or eliminated entirely, in an embodiment.

Accordingly, exemplary embodiments of lightweight, stiffened panels made using additive manufacturing techniques have been provided. The disclosed panels beneficially are capable of dampening vibration as well as having various hardware affixed thereto, but do not suffer from the drawbacks of requiring complicated and expensive manufacturing processes, such as cutting and bonding. The disclosed panels take advantage of simplified additive manufacturing processes, allowing for paneling with equal or greater functionality in terms of weight, vibration damping, and utility, while being significantly less time-consuming and expensive, as compared with the prior art designs.

While at least one exemplary embodiment has been presented in the foregoing detailed description, it should be appreciated that a vast number of variations exist. It should also be appreciated that the exemplary embodiments of the vibration isolator assembly are only examples, and are not intended to limit the scope, applicability, or configuration of the invention in any way. Rather, the foregoing detailed description will provide those skilled in the art with a convenient road map for implementing an exemplary embodiment of the inventive vibration isolator assembly. It is understood that various changes may be made in the function and arrangement of elements described in an exemplary embodiment without departing from the scope of the invention as set forth in the appended claims.

## Claims

1. A method for manufacturing a stiffened panel comprising the steps of:
providing three-dimensional computer design model for the stiffened panel, the three-dimensional computer design model comprising:
a lattice structure comprising a plurality of unit cells, the lattice structure defining a first side and a second side opposite the first side, and four panel ends lateral to the first and second sides;
a first face sheet disposed along the first side and a second face sheet disposed along the second side;
a plurality of panel-side insert blocks disposed within the lattice structure and through either or both of the first and second face sheets, and comprising a threaded receiving portion configured for receiving and coupling with a hardware attachment; and
a plurality of panel-end insets disposed within the lattice structure at the panel ends and configured for securing the stiffened panel at a location, attaching multiple panels together, and/or coupling with a hardware attachment,
wherein the three-dimensional computer design model excludes additive manufacturing print support structures; and
using an additive manufacturing technique, building-up the stiffened panel in accordance with the three-dimensional computer design model in a layer-by-layer manner that excludes the use of brazing, fasteners, adhesives, or the like such that the lattice structure, the first and second face sheets, the panel-end insets, and the panel-side insert blocks comprise a unitary structure.

2. The method of claim 1, wherein the additive manufacturing technique comprises a powder-bed additive manufacturing technique employing a high energy density laser beam to build-up layers of the stiffened panel with a metal alloy in accordance with the three-dimensional computer design model.

3. The method of claim 2, wherein the metal alloy comprises an aluminum alloy.

4. The method of claim 1, wherein the three-dimensional computer design model comprises the panel-end insets positioned on either of one, two, three, or four of the four panel ends.

5. The method of claim 1, wherein the three-dimensional computer design model comprises the panel-side insert blocks positioned on either or both of the first and second sides.

6. The method of claim 1, wherein the three-dimensional computer design model comprises the unit cells of the lattice structure configured as a centered cubic network comprising a plurality of bars joining one another at a central node.

7. The method of claim 1, wherein the centered cubic network comprises eight bars joining from the central node to a respective corner of the unit cells.

8. The method of claim 1, wherein the three-dimensional computer design model comprises the first and second face sheets substantially parallel to one another on opposite side of the lattice structure.

9. The method of claim 1, further comprising performing a finishing treatment on the stiffened panel after completing the additive manufacturing technique.

10. The method of claim 1, wherein the additive manufacturing technique is performed such that the first and second face sheets are built-up perpendicular to a build-surface employed by the additive manufacturing technique and without the use of additive manufacturing support structures.

11. A stiffened panel comprising:
a lattice structure comprising a plurality of unit cells, the lattice structure defining a first side and a second side opposite the first side, and four panel ends lateral to the first and second sides;
a first face sheet disposed along the first side and a second face sheet disposed along the second side; and
a plurality of panel-side insert blocks disposed within the lattice structure and through either or both of the first and second face sheets, and comprising a threaded receiving portion configured for receiving and coupling with a hardware attachment;
a plurality of panel-end insets disposed within the lattice structure at the panel ends and configured for securing the stiffened panel at a location, attaching multiple panels together, and/or coupling with a hardware attachment,
wherein the lattice structure, the first and second face sheets, the panel-end insets, and the panel-side insert blocks comprise a unitary structure that excludes brazing, fasteners, adhesives, or the like for maintaining said components in a fixed relationship as a single unit, the unitary structure being manufactured using additive manufacturing techniques, and
wherein the unitary structure is in a self-supporting configuration that excludes additive manufacturing print support structures that would be removed subsequent to manufacturing using the additive manufacturing techniques.

12. The stiffened panel of claim 11, wherein at least a portion of the stiffened panel comprises an aluminum alloy.

13. The stiffened panel of claim 11, wherein both of the first and second face sheets comprise a plurality of the panel-side insert blocks.

14. The stiffened panel of claim 11, wherein the unit cells of the lattice structure are configured as a centered cubic network comprising a plurality of bars joining one another at a central node.

15. The stiffened panel of claim 11, wherein the first and second face sheets are substantially parallel to one another on opposite side of the lattice structure.
